## Europäisches Patentamt
## European Patent Office
## Office européen des brevets

(19)

(11) Veröffentlichungsnummer: **0 139 036**
**B1**

(12)

# EUROPÄISCHE PATENTSCHRIFT

(45) Veröffentlichungstag der Patentschrift:
**23.09.87**

(51) Int. Cl.⁴: **B 23 K 7/10**

(21) Anmeldenummer: **83110570.5**

(22) Anmeldetag: **22.10.83**

(54) Maschine zum Brennschneiden oder Flämmen.

(43) Veröffentlichungstag der Anmeldung:
**02.05.85 Patentblatt 85/18**

(45) Bekanntmachung des Hinweises auf die Patenterteilung:
**23.09.87 Patentblatt 87/39**

(84) Benannte Vertragsstaaten:
**AT BE CH DE FR GB IT LI**

(56) Entgegenhaltungen:
**DE-A-2 901 417**
**DE-A-2 938 345**
**DE-A-3 142 190**
**US-A-4 261 552**

(73) Patentinhaber: **AUTE Gesellschaft für autogene Technik mbH, Zollikerstrasse 228, CH- 8029 Zürich (CH)**

(72) Erfinder: **Lotz, Horst K., Kiefernweg 13, D-6200 Wiesbaden- Delkenheim (DE)**

(74) Vertreter: **Blumbach Weser Bergen Kramer Zwirner Hoffmann Patentanwälte, Sonnenbergerstrasse 43, D-6200 Wiesbaden 1 (DE)**

EP 0 139 036 B1

## Beschreibung

Die Erfindung betrifft eine Maschine zum Brennschneiden oder Flämmen von Knüppeln, Blöcken und Brammen in und nach Stahl-Stranggußanlagen in Stahlwerken und Schmieden mit mindestens einem bewegbaren Brenner, der als Kopfstück eines über den Werkstück angeordneten, kettenartigen Auslegers ausgebildet ist, dessen Glieder nach oben abknicken können und der am vorderen Ende eine Synchronisierungshilfseinrichtung aufweist.

Bei einer derartigen Maschine ist es vermieden, daß der Brenner an einem Wagen angeordnet ist, der auf einer Laufbahn hin- und herbewegbar ist, wobei die Versorgungsschläuche von einem festen Punkt herunterhängen, girlandenartig an Schlauchwagen befestigt sind oder durch Kabelschleppketten zum Brenner in seiner im Betrieb sich ändernden Lage geführt werden.

Bei einer derartigen bekannten Maschine (DE-OS 31 42 190) wird ein derartiger kettenartiger Ausleger auf eine angetriebene Trommel aufgewickelt. Beim Betrieb von modernen Horizontalstranggußanlagen mit vielen Oszillationsbewegungen bis zu 200 pro Minute, die über Beschleunigung direkt in Verzögerung und einen nachfolgenden Stillstand und danach in eine entgegengesetzt gerichtete Beschleunigung mit folgender Verzögerung und neuerlicher Umkehr gehen, d.h. bis zu $200 \times 4 = 800$ Reaktionskräfte mit Beschleunigungen bis zu $2,5$ m/sec$^2$ in synchron-mitgenommenen Maschinen erzeugen, sind besonders beschleunigungsfeste Brennschneidmaschinen erforderlich, bei Flämm-Maschinen ist die Zahl der Beschleunigungsvorgänge geringer, jedoch muß auf über 20 mn/min beschleunigt werden. Probleme bereiten dabei die mit der angetriebenen Trommel zu bewegenden Massen sowie die dabei nicht zu vermeidende Biegung der flexiblen Versorgungsleitungen im Ausleger.

Der Erfindung liegt daher die Aufgabe zugrunde, eine Maschine zum Brennschneiden oder Flämmen der eingangs genannten Art verfügbar zu machen, mit der bei hoher Beschleunigung und Verzögerung die Brennerbewegung in möglichst guter Übereinstinnung mit den sich bewegenden Werkstück oder mit einem Maschinenwagen sich befindet, wobei die durch den Ausleger bewegten Massen verringert sind und die Biegung der flexiblen Leitungen begrenzt ist.

Die Erfindung besteht darin, daß der Ausleger am hinteren Ende mit einer Antriebseinrichtung versehen ist, wobei der Ausleger in der Ausgangslage mit einer großen Kettenschlaufe mit den in der Kettenachse liegenden, flexiblen Leitungen zu einer immer kleineren Schlaufe zusammenziehbar ist.

In zweckmäßiger Weise ist dabei vorgesehen daß die Antriebseinrichtung aus einem Motor besteht der ein Treibrollenpaar mit einer von einem Bedienungsmann einer automatischen Steuerung oder einer Geschwindigkeitsmeßrolle vorgegebenen Geschwindigkeit antreibt.

Ein ausreichender Schlupf ermöglicht einen kurzzeitigen bzw. kurzwegigen Überholbetrieb bzw. Brems- und Rücklaufbetrieb.

In zweckmäßiger Weise ist vorgesehen, daß die Synchronisierungshilfseinrichtung aus zwei pneumatisch oder hydraulisch betätigten Anklemmhebelpaaren besteht.

Um ein Nicken des Brennerkopfes zu vermeiden ist je ein Anklemmhebelpaar vor oder hinter dem Brennerkopf angeordnet.

Eine vorteilhafte Ausbildung der Erfindung besteht darin, daß der Schwerpunkt des Brennerkopfes und der mit ihm verbundenen Teile maximal 300 mm über dem Werkstück angeordnet ist.

Durch eine doppelte Brennerhaltung bei großem, steifem Brennerdurchmesser doppelten einstellbaren Wälzlagern und großem steifem Querschnitt der Anklemmhebel ist die Maschine moglichst spielfrei und schwingungsfrei.

Gemäß einer weiteren Ausbildung der Erfindung sind seitliche Führungsflächen für den Ausleger in seiner Bewegung zur Schlaufenvergrößerung bzw. Schlaufenverkleinerung der Auslegerkette vorgesehen.

Dabei besteht eine Weiterbildung darin, daß ein Hebelsystem mit einer Unterstützung durch Gewichte den Ausleger führt.

Ein erstes ortsfestes Glied an dem dem Brenner gegenüberliegenden Ende des Auslegers ist drehbar gelagert, und diese Drehbarkeit entspricht dem Biegevermögen der flexiblen Leitungen zwischen dem ortsfesten, aber drehbaren Glied und dem Festpunkt der flexiblen Leitungen, wie Kabelhalter und Rohr-Schlauchverschraubungen.

Eine vorteilhafte Ausbildung der Erfindung umfaßt weiter eine Brennschneidmaschine bei der der Stahlstrang unter einer diesen tunnelartig umgebenden Haube angeordnet ist, so daß gesonderte Wärmeschutzmaßnahmen an der Maschine entfallen. Dadurch kann auch die Maschine mit einem tieferliegenden Schwerpunkt über der Tunnelhaube angeordnet sein.

Weiter wird von einer Ausbildung der Erfindung umfaßt daß die Maschine eine Zünddrahtvorschubeinrichtung trägt, die dem Zünddraht von einer auswechselbaren Drahtrolle über Führungen, ggf. Schläuche, durch ein am Brenner vorgesehenes Stahlrohr vorschiebt.

Weiter schlägt die Erfindung in einer vorteilhaften Ausbildung vor, daß eine Meßrolle an einem in der Ebene der Strangvorschubrichtung nach beiden Seiten verschwenkbaren Hebel angeordnet ist, dessen der Meßrolle gegenüberliegendes Ende ein Gegengewicht trägt, das die Meßrolle an der Unterseite des Stranges andrückt.

Die Erfindung soll nachstehend anhand von Ausführungsbeispielen unter Bezugnahme auf die beigefügten Zeichnungen näher erläutert werden. In den Zeichnungen zeigen:

Fig. 1 die Seitenansicht eines Auslegers mit Brenner und Synchronisierungseinrichtung.

Fig. 2 eine Brennschneidmaschine mit den Strang tunnelartig umgebender Haube:

Fig. 3 eine abgewandelte Ausführungsform einer Brennschneidmaschine nach Fig. 2;

Fig. 4 die Seitenansicht einer Brennschneidmaschine nach Fig. 2;

Fig. 5 eine Zündradvorschubeinrichtung für einen Brenner;

Fig. 6 die Halterung eines Zündrades am Brenner;

Fig. 7 eine schwenkbare Meßrolleneinrichtung;

Fig. 8 eine Meßrolleneinrichtung nach Fig. 7, in Strangrichtung gesehen.

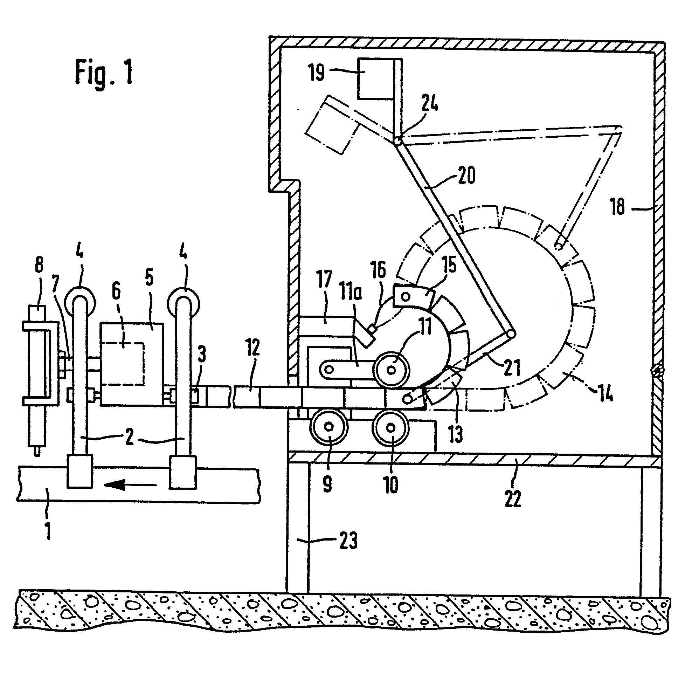

In der Fig.1 ist eine beschleunigungsfeste Maschine dargestellt, die an einem Strang 1 durch zwei Anklemmhebelpaare 2 festgeklemmt ist. Die Anklemmhebelpaare 2 sind in Klemmhebellegern 3 gehaltert und werden durch Klemmzylinder 4 betätigt.

Wie aus der Figur entnommen werden kann, ist je ein Anklemmhebelpaar 2 vor und hinter dem Brennerkopf 5 angeordnet, so daß ein Nicken des Brennerkopfes 5 vermieden wird. Im Brennerkopf 5 sitzt der Brennermotor 6, was gestrichelt dargestellt ist. Der Brennermotor 6 ist über eine Brennerwelle 7 mit einem Doppelhalter mit dem Brenner 8 verbunden, der durch dem Brennermotor 6 im Brennerkopf 5 eingestellt werden kann. Der Brennerkopf 5 mit dem Brenner 8 und den vor und hinter dem Brennerkopf 5 angeordneten Anklemmhebelpaaren 2 ist am vorderen Ende eines kettenartigen Auslegers 12 befestigt. Dieser Ausleger 12 ruht auf einer Stützrolle 9. Eine unten angeordnete Treibrrolle 10 sowie eine auf einer Schwinge 11a angeordnete Treibrolle 11 erteilen dem Ausleger 12 die für den Arbeitsprozeß erforderliche Bewegung.

Die in der Figur dargestellte Arbeitslage des Auslegers zeigt, wie dieser nur nach oben abknickbar ist und eine kleine Schlaufe 13 bildet während der Ausleger in der Figur nach links vorgeschoben ist in die Arbeitsstellung, in der beispielsweise der Brenner 8 einen Schneidvorgang am Strang 1 ausführt. Wird der Ausleger 12 in seine Ausgangslage zurückgeführt so bildet die Auslegerkette eine große Schlaufe 14, wie gestrichelt dargestellt ist. Um diese Bewegung zu ermöglichen, ist das erste ortsfeste Glied 15, das an den dem Brenner 8 gegenüberliegenden Ende des Auslegers 12 angebracht ist, drehbar gelagert. Diese Drehbarkeit entspricht dem Biegevermögen der flexiblen Leitungen 16 zwischen dem ortsfesten aber drehbaren Glied 15 und dem Festpunkt 17, wie Kabelhalter oder Rohrschlauchverschraubungen der flexiblen Leitungen 16. Im Gehäuse 18, das den Treibrollenantrieb 10, 11 und die Schlaufen 13, 14 des Auslegers 12 sowie die Verbindung der flexiblen Kabel 16 mit dem Auslegerende 15 umschließt, ist desweiteren ein Hebelsystem 20, 21 vorgesehen, das den Ausleger 12 führt und durch ein Ausgleichsgewicht 19 unterstützt ist.

Wird der Ausleger 12 zurückgezogen, so schwenkt der Hebel 20 um den Drehpunkt 24 aufgrund des Verbindungshebels 21, der an dem dem Drehpunkt 24 gegenüberliegenden Ende des Hebels 20 angelenkt und mit dem Ausleger 12 verbunden ist. Die Überwindung der Schwerkraft, die auftritt, wenn der Ausleger 12 von der kleinen Schlaufe 13 in die Anordnung der großen Schlaufe 14 gebracht wird, bleibt nicht allein dem Rollenantrieb 10, 11 überlassen, sondern ein Ausgleichsgewicht 19 schwenkt in die strichpunktiert dargestellte Lage, wobei sich die Hebel 20, 21 ebenfalls in die strichpunktierte Lage bewegen. In dieser Ausgangslage ist der Ausleger 12 vollständig zurückgezogen und kann von dieser Lage ausgehend eine neue Arbeitsbewegung ausführen, indem der Ausleger 12 in die dargestellte Arbeitslage mit einer kleinen Schlaufe zurückehrt. Die sich dabei mit der Schwerkraft bewegende Auslegerkette 14 bewegt über das Hebelsystem 20, 21 das Gewicht 19 ebenfalls in die Ausgangslage zurück.

Das Gehäuse 18 ist auf einer Plattform 22 montiert die über Stützen 23 in einer Ebene angeordnet ist, die der Arbeitsebene des Auslegers 12 in Bezug auf den Strang 1 entspricht.

Auf diese Weise ist eine beschleunigungsfeste Maschine verfügbar gemacht bei der alle mitbewegten Teile nicht nur von geringer Masse sind, sondern auch möglichst schwingungssteif ausgeführt und spielfrei, eventuell mit mehrfachen, nachstellbaren Lagern, gehalten werden. Gewichte sind durch Gewichtsentlastungen wobei die kurzen Bewegungen elastisch aufgenommen werden, weitgehend ausgeglichen, so daß die Maschine in optimaler Weise sich den modernen Stranggießanlagen anzupassen in der Lage ist.

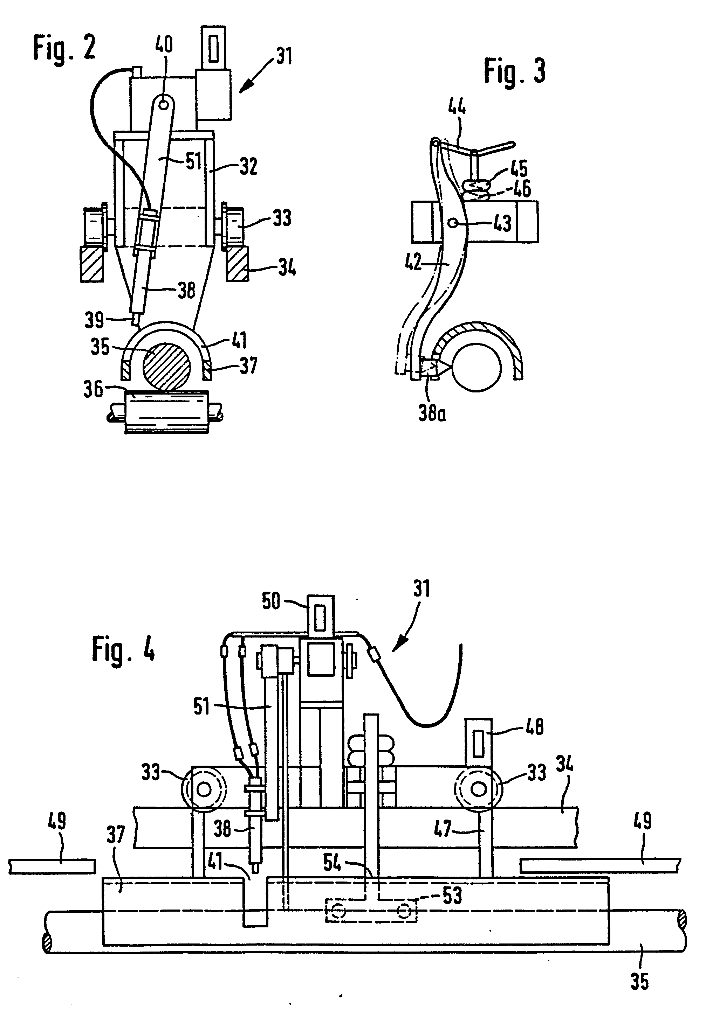

In Fig. 2 ist eine Brennschneidmaschine 31 dargestellt deren Maschinenrahmen 32 auf Laufrädern 33 abgestützt ist die sich auf Schienen 34 bewegen die sich in Richtung eines Gießstranges 35 erstrecken. Der Gießstrang 35, der auf Rollen 36 eines Rollgangs gelagert ist, wird von einer diesen tunnelartig umgebenden Haube 37 umschlossen. Der Brenner 38, der an seinem unteren Ende die Düse 39 trägt, ist bei 40 in der Brennschneidmaschine verschwenkbar gelagert und kann, wie in Fig. 4 dargestellt ist. durch einen Arbeitsschlitz 41 in der Tunnelhaube 37 auf das Stranggußwerkstück, z. B. einen Knüppel 35 einwirken und den gewünschten Brennschnitt durchführen.

In Fig. 3 ist eine abgewandelte Ausführungsform schematisch dargestellt, bei der der Brenner 38a an einem Brennerhebel 42 montiert ist. Der Brennerhebel ist um eine Achse 43 verschwenkbar wobei an dem einen, unteren Ende des Brennerhebels 42 der Brenner 38a angebracht ist, während an dem anderen, oberen Ende ein Gelenkhebel 44 angreift der dem Brennerhebel 42 eine Bewegung erteilt. Der Gelenkhebel 44 ist an einem Druckluftbalg 45 montiert, so daß bei Zuführung von Druckluft in den Druckluftbalg 45 der Gelenkhebel 44 das obere Ende des Brennerhebels 42 nach außen drückt. so daß die in Fig. 3 dargestellte Stellung erreicht wird. Wird der Druckluftbalg 45 von Druckluft entlastet so zieht eine im Druckluftbalg 45 angeordnete Feder 46 den Gelenkhebel 47 an, wodurch der Brennerhebel 42 um den Drehpunkt 43 verschwenkt und die in Fig. 3 gestrichelte Lage einnimmt.

Wie im einzelnen Fig. 4 zeigt, ist die das Werkstück 35 umgebende Tunnelhaube 37 über Streben 47 an der Brennschneidmaschine 31 befestigt. Wenn die Brennschneidmaschine mit Hilfe ihres Verfahrantriebs 38 sich auf den Schienen 34 bewegt, verschiebt sich die Tunnelhaube 37 teleskopartig unter eine stationäre Abdeckung 49, so daß der Brenner 38 sich gemeinsam mit der Tunnelhaube 37 bewegt und durch den Arbeitsschlitz 41 arbeiten kann während er durch den Schneidantrieb 50 über einen Schwenkhebel 51 in bekannter Weise bewegt wird. Um eine Synchronbewegung des Brenners 31 mit dem Werkstück 35 sicherzustellen, sind Anklemmhebel 53 vorgesehen, die sich bei 54 durch die Tunnelhaube hindurch erstrecken. Um die Kühlung zu erhöhen, ist die Tunnelhaube 37 und die stationäre Abdeckung 49 mit den einzelnen, nicht dargestellten Kühlkanälen versehen, durch die Kühlwasser fließt.

Auf diese Weise können bei einer Brennschneidmaschine Vorkehrungen bezüglich eines Wärmeschutzes weitgehend entfallen und eine Gewichtsreduzierung ist in erheblichem Maße möglich. Indem das Werkstück vollkommen abgedeckt ist kann die Maschine näher an den Gießstrang herangerückt werden. so daß der Schwerpunkt der Maschine sehr tief liegt und nur noch kurze Brenner erforderlich sind. Damit ist eine massive Lagerung des Brenners ermöglicht und auch sonst verringert sich die Höhe der Brennschneidmaschine, des Gerüstes usw., wodurch eine bessere Zugänglichkeit auch durch Wegfall von Wärmedämmeinrichtungen ermöglicht ist. Auf diese Weise wird auch ermöglicht die Abstände von mehreren Strängen zu verhindern, und ein Heizeinsatz ist ohne die bisher auftretenden Schwierigkeiten möglich.

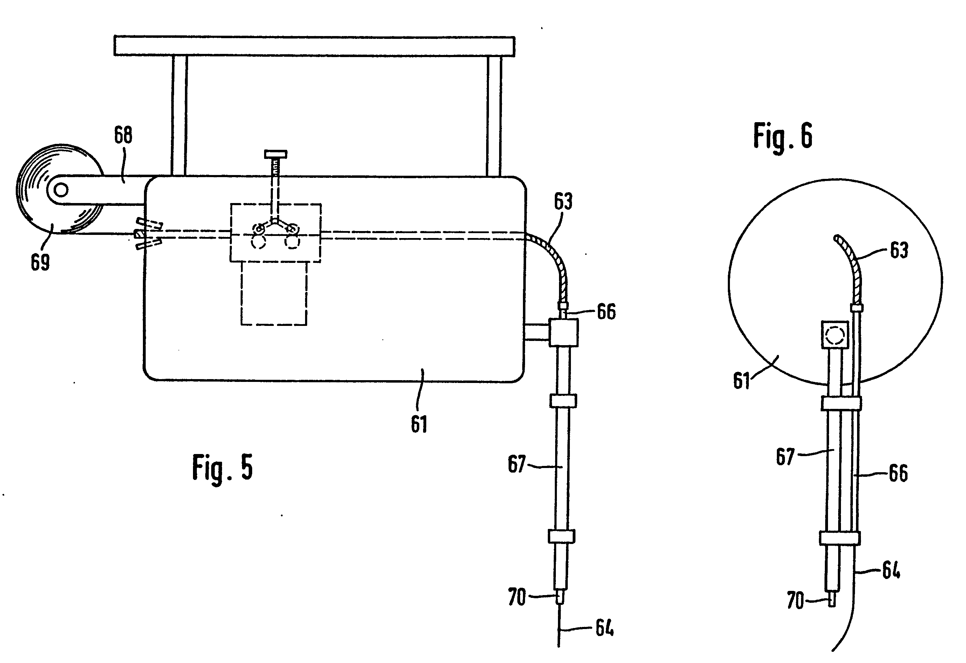

In den Fig. 5 und 6 ist in einer Prinzipskizze eine Zundradvorschubeinrichtung 60 gezeigt die am Maschinenkörper 61 einer Brennschneidmaschine angeordnet ist. Die Zündradvorschubeinrichtung 60 weist sowohl eingangsseitig einen flexiblen Schlauch 62 mit Innenwendel wie auch ausgangsseitig einen flexiblen Schlauch 63 mit Wendel auf, der in den Bereichen vorgesehen wird, wo durch die Brennerbewegung auch auf den Zünddraht 64 eine Bewegung ausgeübt wird. In festgelegten Teilen der Führung des Zündrades 64 ist ein Rohr 65 an der Brennschneidmaschine 61 und ein Rohr 66 am Brenner 67 vorgesehen. Die über einen Lagerarm 68 am Maschinenkörper 61 der Brennschneidmaschine montierte Drahtrolle 69 ermöglicht so, im Rahmen des durch die Drahtrolle 69 zur Verfügung stehenden Vorrats über die Zündradvorschubeinrichtung 60 eine kontinuierliche Zuführung des Zündrads 64 in den Bereich der Düse 70, die am unteren Ende des Brenners 67 vorgesehen ist. Die Zündradvorschubeinrichtung 60 arbeitet mit einem Vorschubrollenpaar 71, das über eine von außen zugängliche Spannschraube 72 einstellbar ist. Auf diese Weise ist ein fortgesetztes, auch fernsteuerbares Zündradstarten möglich.

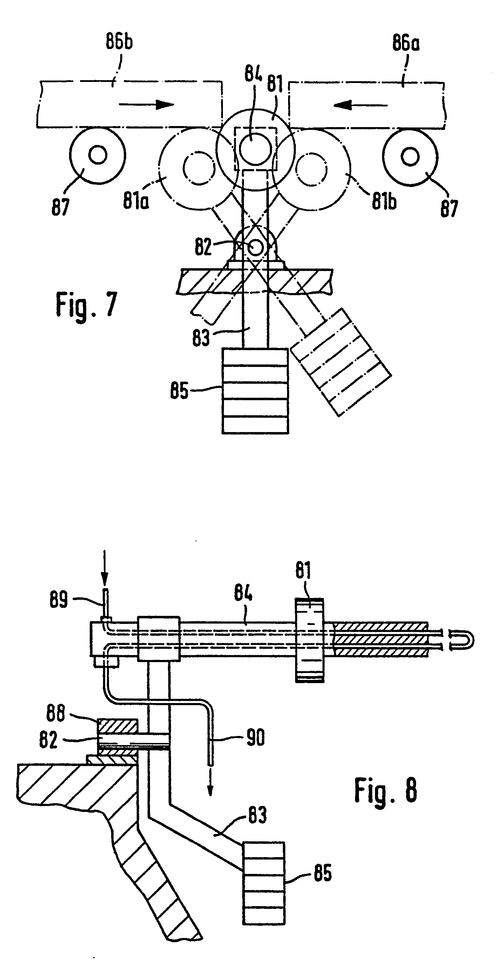

In den Fig. 7 und 8 ist eine ortsfeste Meßrolle 81 dargestellt. die am oberen Ende eines in der Mitte bei 82 beweglich gelagerten Meßrollenhebels 83 befestigt ist. Die Meßrolle 81 selbst ist am oberen Ende des Meßrollenhebels 83 bei 84 drehbar gelagert. An dem der Meßrolle 81 gegenüberliegenden unteren Ende des Meßrollenhebels 83 ist ein Gegengewicht 85 befestigt, das die Rolle in die in Fig. 7 dargestellte Lage drängt. Dieses Gegengewicht ist jedoch so bemessen und kann durch die dargestellten Gewichtslamellen eingestellt werden, daß die Meßrolle 81 einerseits den in Fig. 7 gestrichelt dargestellten Werkstücken 86 und 86b ausweichen kann andererseits aber in Anlage an der Unterseite der Werkstücke 86a und 86b verbleibt, und zwar mit einer solchen Andrückkraft, daß eine genügend starke Reibung eine zuverlässige Drehbewegung der Meßrolle 81 gewährleistet und damit ein einwandfreies Messen ermöglicht.

Bewegt sich beispielsweise das Werkstück 86a in Fig. 7 nach links so wird die Meßrolle 81 in die gestrichelt dargestellte Position 81a bewegt, während ein sich nach rechts bewegendes Werkstück 86b die Meßrolle in die ebenfalls gestrichelt dargestellte Lage 81b verbringt. Damit ist sichergestellt, daß die Meßrolle 81a nicht beschädigt wird. obwohl sie über die Rollen 87 des Rollgangs heraussteht, wenn sie sich nicht in Anlage mit einem Werkstück 86 befindet. In Fig.8 ist im einzelnen gezeigt, wie der Meßrollenhebel 83 im unteren Teil abgeknickt ist und an seinem unteren Ende das Gegengewicht 85 trägt. Der Meßrollenhebel 83 sitzt auf einer Welle 82 die von einem Lager 88 abgestützt ist. Weiter ist in Fig. 8 schematisch dargestellt, wie die Welle 84 auf der die Meßrolle 81 sitzt, mit einem Kühlmitteleingang 89 versehen ist und die Meßrollenwelle 84 mit Kühlmittelkanälen durchzogen ist, die ein Hin- und Zurückströmen des Kühlmittels zu einem Kühlmittelauslaß 90 erlaubt. Es kann auch vorgesehen sein, daß die Meßrolle 81 ebenfalls von dem Kühlmittel durchflossen wird.

**Patentansprüche**

1. Maschine zum Brennschneiden oder Flämmen von Knüppeln, Blöcken und Brammen (1) in und nach Stahl-Stranggußanlagen in Stahlwerken und Schmieden mit mindestens einem bewegbaren Brenner (8), der als Kopfstück eines über dem Werkstück (1) angeordneten, kettenartigen Auslegers (12) ausgebildet ist, dessen Glieder nach oben abknicken können und der am vorderen Ende eine Synchronisierungshilfseinrichtung (2, 3, 4) aufweist,
dadurch gekennzeichnet,
daß der Ausleger (12) am hinteren Ende mit einer Antriebseinrichtung (10, 11) versehen ist, wobei der Ausleger (12) in der Ausgangslage mit einer großen Kettenschlaufe (14) mit den in der Kettenachse liegenden, flexiblen Leitungen (16) zu einer immer kleineren Schlaufe (13) zusammenziehbar ist.

2. Maschine nach Anspruch 1,
dadurch gekennzeichnet, daß die Antriebseinrichtung (10, 11) aus einem Motor besteht, der ein Treibrollenpaar (10, 11) mit einer von einem Bedienungsmann, einer automatischen Steuerung oder einer Geschwindigkeitsmeßrolle vorgegebenen Geschwindigkeit antreibt.

3. Maschine nach Anspruch 2,
dadurch gekennzeichnet, daß ein ausreichender Schlupf einen kurzzeitigen bzw. kurzwegigen, durch die Synchronisierungshilfseinrichtung (2, 3, 4) bewirkten Überholbetrieb bzw. Brems- und Rücklaufbetrieb ermöglicht.

4. Maschine nach einem der Ansprüche 1-3 dadurch gekennzeichnet, daß die Synchronisierungshilfseinrichtung aus zwei automatisch oder hydraulisch betätigten Anklemmhebelpaaren (2) besteht und der Schwerpunkt des Brennerkopfes (5) und der mit ihm verbundene Teil maximal 300 mm über dem Gießstrang (1) angeordnet ist.

5. Maschine nach einem der Ansprüche 1-4, dadurch gekennzeichnet, daß ein Hebelsystem (20, 21) mit einer Unterstützung durch Gewichte (19) den Ausleger (12) führt.

6. Maschine nach einem der Ansprüche 1-5 dadurch gekennzeichnet, daß das ortsfeste erste Glied (15) am dem Brenner (8) gegenüberliegenden Ende des Auslegers (12) begrenzt drehbar gelagert ist und diese Drehbarkeit dem Biegevermögen der flexiblen Leitungen (16) zwischen dem ortsfesten oder drehbaren Glied (15) und dem Festpunkt (17), wie Kabelhalter oder Rohrschlauchverschraubungen der flexiblen Leitung (16) entspricht.

7. Maschine nach einem der Ansprüche 1-6, dadurch gekennzeichnet, daß der Strang (35) unter einer diesen tunnelartig umgebenden Haube (37) angeordnet ist, die mit der Brennschneidmaschine (31) bewegbar ist so daß gesonderte Wärmeschutzmaßnahmen an der Maschine entfallen.

8. Maschine nach Anspruch 7, dadurch gekennzeichnet, daß die Maschine (31) mit einem tiefliegenden Schwerpunkt über der Tunnelhaube (37) angeordnet ist.

9. Maschine nach einem der Ansprüche 1-8, dadurch gekennzeichnet. daß die Maschine eine Zünddrahtvorschubeinrichtung (60) trägt, die den Zünddraht (64) von einer auswechselbaren Drahtrolle (69) über Führungen (65), gegebenenfalls Schläuche (62, 63) durch ein am Brenner (67) vorgesehenes Stahlrohr (66) vorschiebt.

10. Maschine nach einem der Ansprüche 1-9, dadurch gekennzeichnet, daß eine Meßrolle (11) an einem in der Ebene der Strangvorschubrichtung nach beiden Seiten verschwenkbaren Hebel (83) angeordnet ist, dessen der Meßrolle (81) gegenüberliegendes Ende ein Gegengewicht (85) trägt, das die Meßrolle an die Unterseite des Strangs (86) andrückt.

**Claims**

1. An apparatus for torch-cutting or flame-scarfing billets, ingots and slabs (1) in and after continuous steel casting plants in steel works and forges, the apparatus comprising at least one movable burner (8) embodied as a head of a chain-like swing arm (12) which is disposed above the workpiece (1) and whose links can bend upwardly and which has a synchronization aid (2 - 4) at its front end, characterised in that the swing arm (12) has drive means (10, 11) at its rear end and when in its initial position can, by means of flexible lines (16) disposed on the chain axis, be contracted from an initially large loop (14) to a decreasingly small loop (13).

2. An apparatus according to claim 1, characterised in that the drive means (10, 11) are in the form of a motor driving a pair (10, 11) of driving rollers at a speed determined by an operator or an automatic control or a speed-measuring roller.

3. An apparatus according to claim 2, characterised in that adequate slip makes possible a brief or short-distance free wheeling or braking and return operation produced by the synchronization aid (2 - 4).

4. An apparatus according to any of claims 1 to 3, characterised in that the synchronization aid comprises two automatically or hydraulically actuated clamping lever pairs (2), and the centre of gravity of the burner head (5) and the part connected thereto is disposed at most 300 mm above the casting strand (1).

5. An apparatus according to any of claims 1 - 4, characterised in that linkage (20, 21) supported by weights (19) guides the swing arm (12).

6. An apparatus according to any of claims 1 - 5, characterised in that the stationary first link (15) is so mounted at the swing arm end remote from the burner (5) as to have limited provision for rotation and this rotatability corresponds to the bendability of the flexible lines (16) between the stationary or rotatable link (15) and the fixed position (17), such as cable holders or hose connections, of the flexible line (16).

7. An apparatus according to any of claims 1 - 6, characterised in that the strand (35) is disposed below a hood (37) which extends around it like a tunnel and which is movable together with the torch-cutting apparatus (31), so that no special provision for heat protection is required on the apparatus.

8. An apparatus according to claim 7, characterised in that the apparatus (31) is disposed above the tunnel hood (37) with a low centre of gravity.

9. An apparatus according to any of claims 1 - 8, characterised in that the apparatus carries an ignition wire feeder (60) which feeds the ignition wire (64) from a replaceable wire reel (69) by way of guides (65) and possibly hoses (62, 63) through a steel tube (66) on the burner (67).

10. An apparatus according to any of claims 1 - 9, characterised in that a measuring roller (11) is disposed on a lever (83) which is pivotable to either hand in the plane of the strand feeder and whose end remote from the measuring roller (81) carries a counterweight (85) pressing the measuring roller on to the bottom of the strand (86).

## Revendications

1. Machine pour le découpage ou le décriquage au chalumeau de billettes, lingots et brames (1) montée dans ou après les installations de coulée continue dans les aciéries et les forges, avec au moins un chalumeau (8) mobile qui est conformé en tête d'un bras (12) en forme de chaîne disposé au-dessus de la pièce d'oeuvre (1), dont les maillons peuvent se plier vers le haut et qui possède à son extrémité antérieure un dispositif auxiliaire de synchronisation (2, 3, 4), caractérisée en ce que le bras (12) est pourvu à son extrémité arrière d'un dispositif d'entraînement (10, 11), ledit bras (12), qui se présente en position de départ avec une grande boucle de chaîne (14), se raccourcissant avec les conduites flexibles (16) situées dans l'axe de la chaîne pour former une boucle (13) de plus en plus petite.

2. Machine selon la revendication 1, caractérisée en ce que le dispositif d'entraînement (10, 11) est constitué par un moteur qui entraîne une paire de poulies motrices (10, 11) a une vitesse prédéfinie soit par un opérateur, soit par un dispositif de commande automatique, soit au moyen d'un rouleau mesureur de vitesse.

3. Machine selon la revendication 2, caractérisée en ce qu'un glissement suffisant permet pendant un court espace de temps ou sur une courte longueur de parcours un fonctionnement à rattrapage ou à freinage et marche arrière opéré par le dispositif auxiliaire de synchronisation (2, 3, 4).

4. Machine selon une quelconque des revendications 1 à 3, caractérisée en ce que le dispositif auxiliaire de synchronisation est constitué par deux paires de leviers de serrage (2) actionnés par un dispositif automatique ou hydraulique, et en ce que le centre de gravité de la tête de chalumeau (5) et de la partie qui lui est reliée est disposé au maximum à 300 mm au-dessus de la barre de coulée (1).

5. Machine selon une quelconque des revendications 1 à 4, caractérisée en ce qu'un système de leviers (20, 21) assisté par des poids (19) guide le bras (12).

6. Machine selon une quelconque des revendications 1 à 5, caractérisée en ce que le premier maillon (15) stationnaire est monté à l'extrémité du bras (12) située à l'opposé du chalumeau (8) de façon à pouvoir tourner entre certaines limites, et en ce que cette possibilité de rotation correspond à la capacité de cintrage des conduites (16) flexibles entre le maillon (15) stationnaire ou pouvant tourner et le point fixe (17) tel que porte-câble ou raccords tubulaires vissés de la conduite flexible (16).

7. Machine selon une quelconque des revendications 1 à 6, caractérisée en ce que la barre de coulée (35) est disposée sous une hotte (37) qui l'entoure à la façon d'un tunnel et qui est déplaçable avec la machine de découpage au chalumeau (31) de sorte qu'il n'est pas nécessaire de prendre des mesures de protection contre la chaleur particulières sur la machine.

8. Machine selon la revendication 7, caractérisée en ce que ladite machine (31) est disposée avec un centre de gravité abaissé au-dessus de la hotte en forme de tunnel (37).

9. Machine selon une quelconque des revendications 1 à 8, caractérisée en ce que ladite machine porte un dispositif d'avancement de fil d'amorce (60) qui déroule le fil d'amorce (64) d'une bobine de fil (69) remplaçable et, par des guidages (65), éventuellement tuyaux flexibles (62, 63), le fait avancer à travers un tube d'acier (66) prévu sur le chalumeau (67).

10. Machine selon une quelconque des revendications 1 à 9, caractérisée en ce qu'un rouleau mesureur (11) est disposé sur un levier (83) pouvant pivoter des deux côtés dans le plan du dispositif d'avancement de la barre de coulée, dont l'extrémité située à l'opposé du rouleau mesureur (81) porte un contrepoids (85) qui applique sous pression le rouleau mesureur contre la face inférieure de la barre de coulée (86).

# Fig. 1

Fig. 2

Fig. 3

Fig. 4

Fig. 5

Fig. 6

0 139 036

Fig. 7

Fig. 8